**Europäisches Patentamt**

**European Patent Office**

**Office européen des brevets**

(19)

(11) Veröffentlichungsnummer: **0 101 816**
**B1**

(12)

# EUROPÄISCHE PATENTSCHRIFT

(45) Veröffentlichungstag der Patentschrift:
18.12.85

(21) Anmeldenummer: **83106139.5**

(22) Anmeldetag: **23.06.83**

(51) Int. Cl.⁴: **C 04 B 41/49**

(54) **Tiefenimprägnierung von Beton.**

(30) Priorität: **31.07.82 DE 3228660**

(43) Veröffentlichungstag der Anmeldung:
**07.03.84 Patentblatt 84/10**

(45) Bekanntmachung des Hinweises auf die Patenterteilung:
**18.12.85 Patentblatt 85/51**

(84) Benannte Vertragsstaaten:
**AT BE CH DE FR GB IT LI LU NL SE**

(56) Entgegenhaltungen:
**EP - A - 0 002 502**
**DE - C - 834 002**
**US - A - 3 244 541**
**US - A - 3 258 382**
**US - A - 4 342 796**

(73) Patentinhaber: **DYNAMIT NOBEL AKTIENGESELLSCHAFT, Postfach 1209, D-5210 Troisdorf, Bez. Köln (DE)**

(72) Erfinder: **Rödder, Karl-Martin, Dr., Im Wiesengrund 68, D-5210 Troisdorf-Spich (DE)**

## Beschreibung

Gegenstand der vorliegenden Erfindung ist die hydrophobierende Tiefenimprägnierung von Beton. Sie wird unter Verwendung von Alkyltrialkoxysilanen durchgeführt.

Es ist zum Beispiel aus der DE-C Nr. 2029446 bekannt, poröse Baustoffe, zu denen auch Beton gezählt wird, mit Alkyltrialkoxysilanen zu imprägnieren. Die Imprägnierung wird dabei so durchgeführt, dass Lösungen der Silane auf die Oberfläche der Baustoffe aufgebracht werden. Als bevorzugte Lösungsmittel werden in dieser Patentschrift Alkohole genannt, weil mit diesen Lösungsmitteln die beste Imprägnierwirkung erreicht wird.

Diese gute Imprägnierwirkung von alkoholischen Lösungen der Alkylsilane erklärte man sich bisher dadurch, dass diese besonders gut in den Baustoff eindringen können, wobei der Alkohol als besonders gutes Transportmittel angesehen wird, der ein tiefes Eindringen des Silans in den Baustoff ermöglicht.

Die Verwendug dieser bekannten Alkylsilanlösung bei der Hydrophobierung von Beton hat jedoch folgenden Nachteil: Da das Porenvolumen von Beton im allgemeinen sehr klein ist und um so geringer wird, je hochwertiger der Beton ist, kann nur relativ wenig Alkylsilanlösung in den Beton bei einmaliger Applikation dieser Lösung in die Betonoberfläche eindringen. Dies liegt daran, dass das geringe Porenvolumen in Kontakt mit der Atmosphäre, wie er ja bei praktisch allen Bauwerken aus Beton gegeben ist, aufgrund der Wechselwirkung mit dem in der Luft enthaltenden Wasserdampf mehr oder weniger mit Wasser gefüllt ist. Die Alkylsilanlösung kann deshalb nicht genügend tief in die Oberfläche eindringen, um auch eine Langzeitwirkung der Silane zu ergeben.

Die hydrophobierende Wirkung von Alkyltrialkoxysilanen beruht bekannterweise darauf, dass sich intermediär – aufgrund der atmosphärischen Feuchtigkeit und gegebenenfalls des auf der Oberfläche befindlichen Wassers – Alkylsilanöle bilden, deren OH-Gruppen einerseits mit den OH-Gruppen des zu hydrophobierenden Materials und andererseits mit anderen OH-Gruppen des Silanöls unter Bildung von Alkylsiloxanen reagieren. Dadurch entsteht ein Verbund zwischen Alkylsiloxanen und der mineralischen Grenzfläche. Durch diese Grenzflächenverbindug wird die Grenzflächenspannung der mineralischen Baustoffe gegenüber Wasser stark erhöht und der Körper hydrophob. Die Stärke der Hydrophobie hängt von der Art der Alkylgruppe ab. Die Bindung dieser Alkylgruppe an das Si-Atom der Alkylsilane kann jedoch durch energiereiche Strahlen, z.B. UV-Licht, zerstört werden.

Die Langzeitwirkung von Hydrophobierungen mit Alkylsilanen hängt also davon ab, wie stark Licht- und UV-Strahlen die Si-C-Bindung in dem System abbauen können: je tiefer das Silan in die Oberfläche des zu schützenden Körpers eindringen kann, um so geringer ist die zersetzende Wirkung der Licht- und UV-Strahlen und um so effektiver die Langzeitwirkung des Silans.

Es bestand also die Aufgabe, bei der Hydrophobierung von Beton mit Alkylsilanen Wege zu finden, das Silan tiefer in die Oberfläche des Betons eindringen zu lassen. Die naheliegende Lösung dieser Aufgabe, die Applikation von Silanlösungen mehrmals zu wiederholen, nach dem das Lösungsmittel verdunstet ist, erfordert unnötige Wartezeiten, ist arbeitsintensiv und bedingt Verluste an Silan, weil dieses beim Verdunsten des Lösungsmittels mitgerissen wird.

In Erfüllung der gestellten Aufgabe wurde nun ein Verfahren zur hydrophobierenden Tiefenimprägnierung von Beton durch Behandeln von dessen Oberfläche mit Alkyltrialkoxysilanen gefunden, das dadurch gekennzeichnet ist, dass man Alkyltrialkoxysilane, deren Alkylgruppen 3 bis 8 C-Atome und deren Alkoxygruppen 1 bis 2 C-Atome besitzen, lösungsmittelfrei einsetzt.

Es ist zwar durch die DE-B Nr. 1796012 bekannt, unter anderem auch Silane auf die Oberfläche von Beton aufzubringen. Dort bestand jedoch die Aufgabe, den Beton gegen Abblättern und Absplittern widerstandsfähiger zu machen. Aus diesem Grunde wird dort das Silan auf den noch nicht abgebundenen Beton aufgebracht. Im vorliegenden Fall dagegen wird ein bereits abgebundener Beton mit dem Silan behandelt, so dass diesem Schutzrecht nichts zur Lösung der vorliegenden Aufgabe entnommen werden konnte.

Überraschenderweise dringen Alkyltrialkoxysilane, deren Alkylgruppen 3 bis 8 C-Atome und deren Alkoxygruppen 1 bis 2 C-Atome besitzen, lösungsmittelfrei tief in die Oberfläche von Beton ein. Besonders gute Eindringtiefen, die sogar die Eindringtiefen der entsprechenden in Lösungsmittel gelösten Silane bei hohen Konzentratioen deutlich übertreffen, erhält man mit Alkyltrialkoxysilanen, deren Alkylgruppen 3 oder 4 C-Atome besitzen.

Das Aufbringen der Silane auf die Betonoberfläche erfolgt in allgemein bekannter Weise, z.B. durch Eintauchen, Pinseln, Streichen, Sprühen oder flutendes Behandeln mit dem Silan. Im allgemeinen wird soviel Silan aufgetragen, wie der Beton aufsaugt. Dies erkennt man im allgemeinen daran, dass das aufzubringende Silan nicht länger als etwa eine Minute auf der Oberfläche des Betons stehen bleibt und die Oberfläche während dieser Zeit satt feucht bleibt.

Die zu behandelnde Betonoberfläche kann dabei sowohl trocken als auch wasserfeucht sein. Es soll sich jedoch nicht auf ihr stehendes Wasser befinden. Wichtig ist nur, dass die Oberfläche das Silan aufsaugen kann; sie darf deshalb z.B. durch Staub, Salz, Salzlösungen oder Öl, nicht so verschmutzt sein, dass die Saugwirkung beträchtlich verringert wird. Solchermassen verschmutzte Oberflächen müssen vor der Applikation auf an sich bekannte Weise gereinigt werden.

Bei dem zu behandelnden Beton handelt es sich hauptsächlich um Schwerbeton und solche Betonqualitäten, bei denen alkoholische Alkylsilanlösungen nicht genügend tief eindringen. Es kann aber auch Leichtbeton in gleicher Weise behandelt werden. Der Beton liegt dabei in abgebundener Form vor.

Die abgebundene Form kann dabei sowohl als fertiges Bauwerk oder Konstruktionsobjekt oder als ein noch zusammenzusetzendes Fertigbauteil, z.B als Betonplatte, vorliegen. Als Bauwerke oder Konstruktionsobjekte, die erfindungsgemäss behandelt werden können, seien beispielsweise genannt: Strassen, Brücken, Start- und Landebahnen von Flughäfen, Dämme, Sichtbetonkonstruktionen oder andere, auch vorgespannte, Betonkonstruktionen. Die Art der Herstellung solcher Konstruktionen spielt für die Behandlung keine Rolle.

*Beispiele*

Betonprobekörper der Abmessungen 14,0 × 6,0 × 6,0, die durch Zerkleinern grösserer vorgefertigter Betonplatten aus Fertigbeton einer laufenden Produktion erhalten wurden, wurden in die in den Tabellen 1 bis 3 genannten Alkylsilanlösungen mit unterschiedlichen Alkylsilankonzentrationen getaucht. Die Eintauchzeit dauerte jeweils 10 sec., dann wurde bei zwei Versuchsreihen der Stein herausgenommen, abtropfen gelassen und daraufhin wieder in die Imprägnierlösung während 10 sec. getaucht. Die Versuche mit den Lösungsmitteln dienen dabei zu Vergleichszwecken.

Nach dem Tauchvorgang wurden die Probekörper während einer Woche im Freien bei Luftfeuchtigkeiten von über 60% relativer Feuchte gelagert und daraufhin zerbrochen. Die frische Bruchfläche wurde in Wasser getaucht. Die durch das Alkylsilan hydrophobierte Schicht wird dabei von Wasser nicht benetzt und hebt sich vom dunkel gefärbten, nicht hydrophobierten und deshalb durch Wasser benetzten Bereich deutlich ab. Es wurde die Tiefe der hydrophoben Schicht gemessen. Die folgenden Tabellen geben die Ergebnisse wieder.

*Tabelle 1*

| Alkylsilan | Konz. | Lösungsmittel | Betongüte (gemäss DIN 1045) | Tauchzeit | Eindringtiefe |
|---|---|---|---|---|---|
| Propyltrimethoxy-silan | 20% | Ethanol | B 25 PZ | 2×10 sec | 3 mm |
| | 40% | Ethanol | B 25 PZ | 2×10 sec | 5 mm |
| | 60% | Ethanol | B 25 PZ | 2×10 sec | 8 mm |
| | 80% | Ethanol | B 25 PZ | 2×10 sec | 9 mm |
| | 100% | Ethanol | B 25 PZ | 2×10 sec | 12 mm |

*Tabelle 2*

| Alkylsilan | Konz. | Lösungsmittel | Betongüte (gemäss DIN 1045) | Tauchzeit | Eindringtiefe |
|---|---|---|---|---|---|
| Iso-Butyltrimethoxy-silan | 20% | Ethanol | B 45 PZ | 1×10 sec | 1 mm |
| | 40% | Ethanol | B 45 PZ | 1×10 sec | 2 mm |
| | 60% | Ethanol | B 45 PZ | 1×10 sec | 3 mm |
| | 80% | Ethanol | B 45 PZ | 1×10 sec | 3,5 mm |
| | 100% | Ethanol | B 45 PZ | 1×10 sec | 6 mm |

*Tabelle 3*

| Alkylsilan | Konz. | Lösungsmittel | Betongüte (gemäss DIN 1045) | Tauchzeit | Eindringtiefe |
|---|---|---|---|---|---|
| Iso-Butyltrimethoxy-silan | 20% | Ethanol | B 45 PZ | 2×10 sec | 2 mm |
| | 40% | Ethanol | B 45 PZ | 2×10 sec | 3,5 mm |
| | 60% | Ethanol | B 45 PZ | 2×10 sec | 4,5 mm |
| | 80% | Ethanol | B 45 PZ | 2×10 sec | 5 mm |
| | 100% | Ethanol | B 45 PZ | 2×10 sec | 8 mm |

Die Tabellen zeigen, dass die Eindringtiefe der Silanhydrophobierung bei Einsatz von lösungsmittelfreiem Silan am höchsten ist. Wenn dagegen selbst konzentrierte Lösungen von 80% Silangehalt eingesetzt werden, sind die Eindringtiefen erheblich geringer und liegen um 25 bis 42% unter den Werten, die bei lösungsmittelfreiem Einsatz erhalten werden. Selbst bei Konzentrationen um 90% Silanlösungen liegen die Eindringtiefen weit unter den Werten, die bei einem lösungsmittelfreien Einsatz erhalten werden. Die Zunahme der Eindringtiefe macht also von konzentrierten Lösungen der Silane zu dem reinen Silan einen Sprung, der in dieser Grösse unerwartet ist.

## Patentanspruch

Verfahren zur hydrophobierenden Tiefenimprägnierung von Beton durch Behandeln seiner Oberfläche mit Alkyltrialkoxysilanen, dadurch gekennzeichnet, dass man Alkyltrialkoxysilane, deren Alkylgruppen 3 bis 8 C-Atome und deren Alkoxylgruppen 1 oder 2 C-Atome besitzen, lösungsmittelfrei einsetzt.

## Claim

Process for hydrophobizing impregnation in depth of concrete by treatment of its surface with alkyltrialkoxy silanes, characterized in that alkyl trialkoxy silanes whose alkyl groups possess 3 to 8 C-atoms and whose alkoxyl groups possess 1 or 2 C-atoms are employed in the absence of solvent.

## Revendication

Procédé pour l'imprégnation imperméabilisante profonde du béton par traitement de sa surface avec des alkyltrialcoxysilanes, caractérisé en ce qu'on met en œuvre, sans solvants, des alkyltrialcoxysilanes dont les groupes alkyles possèdent 3 à 8 atomes de C et les groupes alcoxy 1 à 2 atomes de C.